# EUROPÄISCHE PATENTANMELDUNG

(11) **EP 3 301 624 A1**
(43) Veröffentlichungstag der Anmeldung: **04.04.2018**
(21) Anmeldenummer: 16191694.5
(22) Anmeldetag: 30.09.2016
(51) Int. Cl.: G06Q 10/08, G06Q 50/28, B64F 1/36

(54) **BAGGAGE-HANDLING-SYSTEM ZUM TREFFEN EINER SORTIERENTSCHEIDUNG**

(71) Anmelder: Siemens Aktiengesellschaft, 80333 München (DE)
(72) Erfinder: MUECK, Dr. Bengt, 32760 Detmold (DE); PASHOV, Dr. Ilian, 78467 Konstanz (DE); ROTTLAND, Dr. Jörg, 78315 Radolfzell (DE); ZISCH, Rainer, 78337 Öhningen (DE)
(74) Vertreter: Maier, Daniel Oliver

(57) **Zusammenfassung**

Die Erfindung offenbart ein Baggage-Handling-System (BHS) (4) als lokale Gepäckabfertigungsanlage eines Flughafens und ein Verfahren zum Sortieren eines Gepäckstücks (2) eines Passagiers im Rahmen der Abwicklung durch das Baggage-Handling-System (BHS) (4). Das Gepäckstück (2) ist mit einem als Gepäckanhänger ausgestalteten Informationsträger (6) markiert, auf welche ursprüngliche Sortierinformationen (8) in Textform und eine eindeutige Gepäckidentifikationsnummer (License-Plate-Number) (10) aufgedruckt sind. Das Baggage-Handling-System (4) umfasst eine BHS-Steuerung (12) und eine Detektionseinheit (14), welche mindestens einen Detektor (16) zum optischen Erfassen des Informationsträgers (6) und mindestens eine Detektionssteuerung (18) umfasst. Der Informationsträgers (6) wird automatisch mit mindestens einem Detektor (16) erfasst und der Informationsträgers (6) wird direkt durch die Detektionseinheit (14) mittels Texterkennung (OCR) ausgelesen. Wenn keine Verbindung zwischen Detektionseinheit (14) und BHS-Steuerung (12) aufgebaut und somit keine Sortierentscheidung anhand der Gepäckidentifikationsnummer (10) getroffen werden kann, wird automatisiert eine Sortierentscheidung basierend auf zumindest Teilen der ursprünglichen Sortierinformationen (8) des ausgelesenen Informationsträgers (6) getroffen.

## Beschreibung

Die vorliegende Erfindung betrifft das technische Gebiet von Gepäckförderanlagen, insbesondere von Flughäfen.

Als lokale Gepäckabfertigungsanlagen transportieren und sortieren Baggage-Handling-Systeme (BHS) von Flughäfen Gepäckstücke von Passagieren - vom Check-In-Schalter zum Flugzeug, bei Transfergepäck von einem Flugzeug zum nächsten und vom Flugzeug hin zur Gepäckausgabe. Involviert in die gesamte Abwicklung eines Gepäckstücks sind daher stets zwei oder mehr Gepäckabfertigungsanlagen - diejenigen des Abflugs- und Ankunftsflughafens, sowie Gepäckförderanlagen von Transferflughäfen. Die Gepäckstücke werden in labyrinthartigen Gepäckverteilsystemen befördert und bringen den Koffer automatisch weiter zum nächsten Flugzeug oder zur Gepäckausgabe.

Um eine automatisierte Abwicklung zu ermöglichen, werden die Gepäckstücke mit einem Gepäckanhänger (IATA Baggage Tag) versehen, welcher eine eindeutige Gepäckidentifikationsnummer (License-Plate-Number) als Barcode und als römische Zahl sowie in Textform aufgedruckte weitere ursprüngliche Sortier- und Gepäckinformationen wie beispielsweise Flugnummern, Passagiernamen umfasst. Die ursprünglichen Sortierinformation können sich jedoch nach Erstellung des Gepäckanhängers ändern, beispielsweise bei Änderungen der Flugroute, durch verpasste Anschlussflüge bedingte Flugänderungen oder weil der Passagier das Boarding und somit den Flug verpasst. Daher verwendet der automatisierte Abwicklungsprozess zunächst nicht die aufgedruckten Sortierinformationen, sondern die Gepäckidentifikationsnummer. Die existierenden Detektionssysteme sind auf das maschinelle Erfassen des Barcodes der Gepäckidentifikationsnummer mit einer Laserscanner als Detektoren umfassenden Detektionseinheit und eine Verarbeitung durch eine BHS-Steuerung ausgerichtet.

Ein übergeordnetes Gepäckdatenverwaltungssystem, auf welche Baggage-Handling-Systeme unterschiedlicher Flughäfen zugreifen können, ordnet jeder Gepäckidentifikationsnummer einer eindeutigen und aktuellen Sortiernachricht (Baggage-Source-Message, BSM) zu, so dass eine auf Basis der Baggage-Source-Message getroffene Sortierentscheidung stets aktuell und korrekt ist. Daher soll nach Möglichkeit stets die aktuelle BSM als Sortierkriterium herangezogen werden.

Dieser Abwicklungsprozess setzt jedoch sowohl das fehlerfreie Erfassen der Gepäckidentifikationsnummer, als auch eine funktionierende Zuordnung der erfassten Gepäckidentifikationsnummer und darüber hinaus auch noch ein funktionierendes Zuordnen der Gepäckidentifikationsnummer zu der Baggage-Source-Message voraus. Wenn das übergeordnete Gepäckdatenverwaltungssystem ausfällt und/ oder keine Verbindung zwischen dem Gepäckdatenverwaltungssystem und dem lokalen Baggage-Handling-System aufgebaut werden kann und/ oder ein Verbindungsausfall zwischen Detektionseinheit und BHS-Steuerung auftritt, kann auch bei fehlerfrei erfolgtem Erfassen der Gepäckidentifikationsnummer keine Zuordnung erfolgen.

Da jedoch in den meisten Fällen die basierend auf der Baggage-Source-Message (BSM) getroffene Sortierentscheidung und die basierend auf der ursprünglichen Sortierinformation getroffene Sortierentscheidung übereinstimmen, ist es - insbesondere bei einem länger andauernden Systemausfall - besser, ein Gepäckstück nach der ursprünglichen Sortierinformation zu sortieren, als keine Sortierentscheidung zu treffen und einen Stau unsortierter und wartender Gepäckstücke im Baggage-Handling-System zu generieren. Hierzu wird eine die aufgedruckten, ursprünglichen Sortierinformationen codierende Fallback-Identifikationsnummer generiert und das Gepäckstück wird mit einem die Fallback-Identifikationsnummer umfassenden Fallback-Gepäckanhänger markiert. Bei einem Systemausfall werden Fallback-Gepäckanhänger oftmals schon am Check-In-Schalter generiert und am Gepäckstück angebracht. Das Erfassen von Transfergepäck ist am Check-In-Schalter allerdings nicht möglich. Um Fallback-Identifikationsnummern auch für Transfergepäck sowie für bereits eingecheckte Gepäckstücke, wenn also ein Systemausfall erst nach dem Check-In auftritt, zu generieren, werden die in Textform aufgedruckten Sortierinformationen an einer manuellen Kodierstation (Manual Encoding Station, MES) manuell ausgelesen, es wird eine entsprechende Fallback-Identifikationsnummer generiert und das Gepäckstück wird zusätzlich zu dem ursprünglichen Gepäckanhänger mit einem die Fallback-Identifikationsnummer umfassenden Fallback-Gepäckanhänger markiert. Diese Fallback-Gepäckanhänger wurden entweder schon vorgedruckt und bereitgehalten oder sie werden bei Bedarf gedruckt. Dieser Prozess ist so kosten-, zeit- und arbeitsintensiv, dass sich bei einem Systemausfall die Gepäckstücke stauen und nicht rechtzeitig sortiert werden können.

Der vorliegenden Erfindung liegt daher die Aufgabe zugrunde, eine möglichst rasche, effiziente und ausfallsichere automatisierte Sortierentscheidung für ein Gepäckstück im Rahmen der Abwicklung durch ein Baggage-Handling-System zu treffen. Diese Aufgabe wird durch die in den unabhängigen Ansprüchen beschriebenen Lösungen gelöst.

Die erfindungsgemäße Lösung sieht ein Verfahren zum Sortieren eines Gepäckstücks eines Passagiers im Rahmen der Abwicklung durch ein Baggage-Handling-System (BHS) als lokale Gepäckabfertigungsanlage, beispielsweise eines Flughafens, vor, wobei:
- das Gepäckstück mit einem beispielsweise als Gepäckanhänger ausgestalteten Informationsträger markiert wird, welcher vor einer Übergabe des Gepäckstücks an das Baggage-Handling-System erstellt wird;
- der Informationsträger ursprüngliche Sortierinformationen und eine eindeutige Gepäckidentifikationsnummer (License-Plate-Number) ganz oder zumindest teilweise in aufgedruckter Textform umfasst;
- das Baggage-Handling-System eine BHS-Steuerung und eine Detektionseinheit umfasst;
- eine Detektionseinheit mindestens einen Detektor zum optischen Erfassen des Informationsträgers und mindestens eine Detektionssteuerung umfasst. Das Verfahren umfasst die Verfahrensschritte:
   a) automatisches Erfassen des Informationsträgers mit mindestens einem Detektor;
   b) Auslesen des Informationsträgers durch die Detektionseinheit mittels Texterkennung (OCR);
   c) Aufbauen einer Verbindung zwischen Detektionseinheit und BHS-Steuerung;
   d) bei erfolgreichem Auslesen der Gepäckidentifikationsnummer und erfolgreichem Aufbauen einer Verbindung zwischen Detektionseinheit und BHS-Steuerung versucht die BHS-Steuerung eine Sortierentscheidung anhand der Gepäckidentifikationsnummer zu treffen;
   e) bei einem nicht erfolgreichem Aufbauen einer Verbindung zwischen Detektionseinheit und BHS-Steuerung und/ oder einem nicht erfolgreichem Auslesen der Gepäckidentifikationsnummer und/ oder einem nicht erfolgreichem Treffen einer Sortierentscheidung durch die BHS-Steuerung wird eine Sortierentscheidung basierend auf zumindest Teilen der ursprünglichen Sortierinformationen des ausgelesenen Informationsträgers getroffen;
   f) weitere Abwicklung des Gepäckstücks gemäß der getroffenen Sortierentscheidung.

Um aktuelle Abweichungen von der ursprünglichen Sortierinformation beim Treffen der Sortierentscheidung zu berücksichtigen, kann das Verfahren zudem den Verfahrensschritt einer Kommunikation der BHS-Steuerung mit einem übergeordneten Gepäckdatenverwaltungssystem umfassen, welches die Gepäckidentifikationsnummer einer dynamischen Baggage-Source-Message (BSM) zuordnet. Die Baggage-Source-Message bildet auch von weiteren Baggage-Handling-Systemen oder andere Systemen übermittelte Änderungen ab, die die Abwicklung des Gepäckstücks beeinflussen.

Gemäß einer Ausführungsform kann eine Verbindung zwischen Detektionseinheit und BHS-Steuerung über eine speicherprogrammierbare Steuerung (SPS - Programmable-Logic-Controller, PLC) aufgebaut werden. Die Komplexität eines Datenaustauschs über die Verbindung kann so verringert werden. Auch kann so eine Ansteuerung eines Fördersystems des Baggage-Handling-Systems über die speicherprogrammierbare Steuerung durch die BHS-Steuerung erfolgen.

Damit bei Bedarf eine IATA-konforme Fallback-Identifikationsnummer vorliegt und diese nicht erst generiert werden muss, das Baggage-Handling-System also schon für einen eventuell später auftretenden System- und/ oder Verbindungsausfall gewappnet ist, kann ein automatisiertes Generieren einer Fallback-Identifikationsnummer durch die Detektionseinheit erfolgen, welche zumindest Teile des ausgelesenen Informationsträgers wenigstens partiell codiert. Das Generieren der Fallback-Identifikationsnummer direkt durch die Detektionseinheit erfordert keine Verbindung mit der BHS-Steuerung, so dass die Fallback-Identifikationsnummer lokal an der Detektionseinheit auch bei einem Ausfall der BHS-Steuerung oder der Verbindung zu dieser vorliegt. An der Detektionseinheit können sowohl Transfer-Gepäckstücke, als auch lokal dem Baggage-Handling-System zugeführte, an dem Flughafen selber eingecheckte Gepäckstücke erfasst und die entsprechenden Fallback-Identifikationsnummern generiert werden, so dass das Baggage-Handling-System schon für einen etwaigen System- und/ oder Verbindungsausfall vorbereitet ist. Die Fallback-Identifikationsnummer codiert die für das Treffen einer Sortierentscheidung notwendigsten Sortierinformationen und kann mit sehr wenig Speicherkapazität abgespeichert und besonders einfach übermittelt werden, beispielsweise an weitere Baggage-Handling-Systeme, welche die Fallback-Identifikationsnummer aufgrund ihrer Standardisierung komplikationslos auslesen können.

Gemäß einer Ausführungsform kann das Treffen einer Sortierentscheidung anhand der Fallback-Identifikationsnummer erfolgen, so dass keine erneute, das Treffen einer Sortierentscheidung unter Umständen verzögernde, Auslesung der ursprünglichen Sortierinformationen zum Treffen einer Sortierentscheidung erforderlich ist.

Um auch bei einem späteren Systemausfall, insbesondere einem nicht erfolgreichen Verbindungsaufbau zwischen Detektionseinheit und BHS-Steuerung und/ oder zwischen BHS-Steuerung und Gepäckdatenverwaltungssystem und/ oder einem Ausfall von BHS-Steuerung und/ oder Gepäckdatenverwaltungssystem Zugriff auf eine Sortierinformation zu erhalten, die mindestens so aktuell oder aktueller als die ursprüngliche Sortierinformation ist, kann ein regelmäßiges Abspeichern eines Satzes von assoziierten Gepäckidentifikationsnummern und aktualisierten Sortierinformationen durch die Detektionseinheit und/ oder die BHS-Steuerung erfolgen. Zum Zeitpunkt des Übermittelns des Satzes von assoziierten Gepäckidentifikationsnummern und aktualisierte Sortierinformationen stimmen die auf der aktualisierten Sortierinformation und die auf der Baggage-Source-Message getroffene Sortierentscheidungen überein.

Gemäß einer weiteren Ausführungsform kann ein Überprüfen der bereits getroffenen Sortierentscheidung zu einem späteren Zeitpunkt erfolgen, insbesondere wenn die Sortierentscheidung nicht durch die BHS-Steuerung getroffen wurde. Wenn aufgrund von einem Systemausfall zum Zeitpunkt des Treffens der Sortierentscheidung ein Abruf einer aktuellen Baggage-Source-Message nicht möglich war, wurde das Gepäckstück evtl. fehlerhaft abgewickelt, da die getroffene Sortierentscheidung nicht durch die BHS-Steuerung und/ oder basierend auf der stets aktuellen Baggage-Source-Message getroffen wurde. Das Überprüfen einer bereits getroffenen, unter Umständen fehlerhaften Sortierentscheidung erlaubt ein Revidieren und reduziert so die finale Fehlsortierquote, beispielsweise vor einer Verladung ins Flugzeug. Die Fehlsortierquote ist besonders hoch bei denjenigen Sortierentscheidungen, die nicht basierend auf ihrer Baggage-Source-Message getroffen wurden.

Hinsichtlich einer Vorrichtung wird die vorstehend genannte Aufgabe gelöst durch ein Baggage-Handling-System (BHS) als lokale Gepäckabfertigungsanlage, beispielsweise eines Flughafens, zum Abwickeln eines Gepäckstücks eines Passagiers gemäß einer Sortierentscheidung. Das Baggage-Handling-System umfasst eine BHS-Steuerung und eine Detektionseinheit, welche mindestens einen Detektor zum optischen Erfassen des Informationsträgers und mindestens eine Detektionssteuerung umfasst, wobei
- das Gepäckstück mit einem beispielsweise als Gepäckanhänger ausgestalteten Informationsträger markiert wird, welcher vor einer Übergabe des Gepäckstücks an das Baggage-Handling-System erstellt wird;
- der Informationsträger ursprüngliche Sortierinformationen und eine eindeutige Gepäckidentifikationsnummer (License-Plate-Number) ganz oder zumindest teilweise in aufgedruckter Textform umfasst.
   a) Die mindestens eine Detektionseinheit ist zum automatischen optischen Erfassen des Informationsträgers ausgestaltet.
   b) Die Detektionseinheit ist zum Auslesen des Informationsträgers mittels Texterkennung (OCR) ausgestaltet.
   c) Die Detektionseinheit und die BHS-Steuerung sind miteinander verbindbar ausgestaltet.
   d) Die BHS-Steuerung ist zum Treffen einer Sortierentscheidung anhand der Gepäckidentifikationsnummer ausgestaltet.
   e) Und die Detektionseinheit ist ausgestaltet, eine Sortierentscheidung basierend auf zumindest Teilen der ursprünglichen Sortierinformationen des ausgelesenen Informationsträgers zu treffen.

Gemäß einer weiteren Ausführungsform kann die BHS-Steuerung ausgestaltet sein zur Kommunikation mit einem übergeordneten Gepäckdatenverwaltungssystem, welches die Gepäckidentifikationsnummer einer dynamischen Baggage-Source-Message (BSM) zuordnet. Auf diese Weise kann die BHS-Steuerung die Baggage-Source-Message vom Gepäckdatenverwaltungssystem abrufen und so eine anhand der Gepäckidentifikationsnummer getroffene Sortierentscheidung unter Berücksichtigung der Baggage-Source-Message treffen. Die Baggage-Source-Message bildet dem Baggage-Handling-System als lokale Gepäckabfertigungsanlage unter Umständen nicht bekannte, die Sortierentscheidung beeinflussende Abweichungen von der ursprünglichen Sortierinformation ab.

Um auch auch bei einem Ausfall der Verbindung zwischen Detektionseinheit und BHS-Steuerung und/ oder zwischen BHS-Steuerung und Gepäckdatenverwaltungssystem und/ oder bei einem fehlerhaften Auslesen der Gepäckidentifikationsnummer ein lokales Treffen einer Sortierentscheidung zu ermöglichen, können die Detektionseinheit und/ oder die BHS-Steuerung ausgestaltet sein, eine Fallback-Identifikationsnummer, welche zumindest Teile des ausgelesenen Informationsträgers wenigstens partiell codiert, zu generieren, insbesondere automatisiert zu generieren.

Um eine möglichst intelligente und effiziente Nutzung der Verbindung zwischen Detektionseinheit und BHS-Steuerung zu ermöglichen, kann das Baggage-Handling-System mindestens eine speicherprogrammierbare Steuerung (SPS - Programmable-Logic-Controller, PLC) umfassen, über welche eine Verbindung zwischen Detektionseinheit und BHS-Steuerung aufgebaut werden kann.

Gemäß einer Ausführungsform können die Detektionseinheit und/ oder die BHS-Steuerung ausgestaltet sein, eine Sortierentscheidung anhand der Fallback-Identifikationsnummer zu treffen. So ist für das Treffen einer Sortierentscheidung keine erneute Ausleseschlaufe nötig und die Detektionseinheit und/ oder die BHS-Steuerung können die Sortierentscheidung anhand der Fallback-Identifikationsnummer lokal treffen.

Gemäß einer weiteren Ausführungsform kann das Baggage-Handling-System mindestens eine BHS-Datenbank umfassen, welche einen Satz von assoziierten Gepäckidentifikationsnummern und aktuellen Sortierinformationen abspeichert. Die in der BHS-Datenbank abgespeicherten aktualisierten Sortierinformationen sind aktueller als die ursprünglichen Sortierinformationen oder entsprechen ihnen. Auf diese Weise kann für den Fall eines Verbindungsausfalls und/ oder teilweisen Ausfalls des Gepäckdatenverwaltungssystems vorgesorgt werden, da so die BHS-Datenbank lokal zum Treffen einer Sortierentscheidung herangezogen werden kann.

Gemäß einer weiteren Ausführungsform können die Detektionseinheit und/ oder die BHS-Steuerung auf die BHS-Datenbank Zugriff haben. So kann die BHS-Datenbank bei einem Verbindungsfehler zwischen Detektionseinheit und BHS-Steuerung und/ oder bei einem Verbindungsfehler zwischen BHS-Steuerung und Gepäckdatenverwaltungssystem zum Treffen einer Sortierentscheidung herangezogen werden.

Damit eine unter Umständen nicht korrekt getroffene Sortierentscheidung noch revidiert werden kann, beispielsweise vor einem Ausschleusen eines Gepäckstücks aus dem Baggage-Handling-System, beispielsweise durch Verladen des Gepäckstücks in ein Flugzeug, können das Baggage-Handling-System und/ oder die Detektionseinheit und/ oder die BHS-Steuerung zum erneuten Überprüfen einer bereits getroffenen Sortierentscheidung ausgestaltet sein.

Weitere Ausführungsformen der Erfindung werden nachfolgend anhand der Figuren beispielsweise näher erläutert. Dabei zeigen:
- Figur 1: ein Baggage-Handling-System welches mit einem Gepäckdatenverwaltungssystem verbindbar ist; und
- Figur 2: ein weiteres Baggage-Handling-System mit unterschiedlich ausgestalteten Detektionseinheiten.

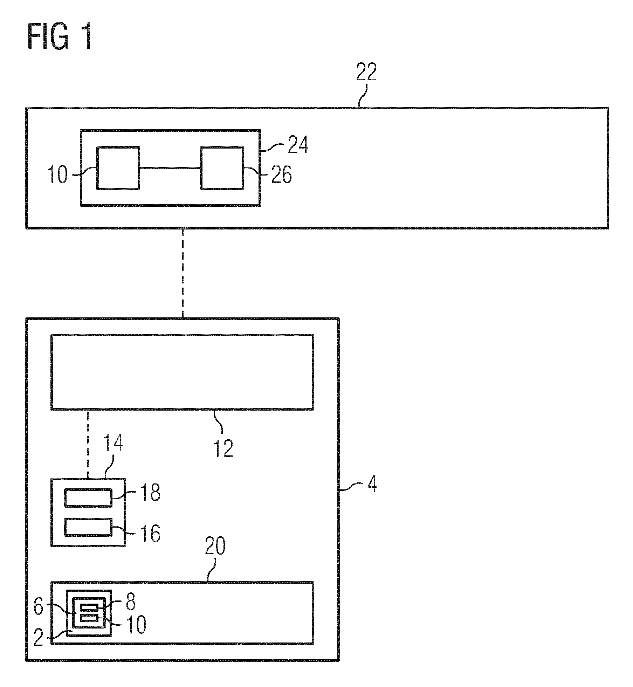

Figur 1 zeigt ein Baggage-Handling-System (BHS) 4 und ein mit diesem verbindbares übergeordnetes Gepäckdatenverwaltungssystem 22 gemäß einer Ausführungsform der Erfindung. Das Baggage-Handling-System 4 ist eine Gepäckabfertigungsanlage eines Flughafens und zur automatisierten Abwicklung von Gepäckstücken 2 von Passagieren ausgestaltet.

An einem Check-In-Schalter des Baggage-Handling-Systems 4 wird jedem Gepäckstück 2 eine temporär eindeutige Gepäckidentifikationsnummer (License-Plate-Number) 10 zugewiesen. Das Gepäckstück 2 wird mit einem Informationsträger 6 markiert, der beispielsweise als ein IATA-konform ausgestalteter Gepäckanhänger ausgestaltet ist. Auf dem Informationsträger 6 werden aufgedruckt die Gepäckidentifikationsnummer 10 als Barcode sowie in menschenlesbarer Textform, sowie in menschenlesbarer Textform ursprüngliche Sortierinformationen 8 des Gepäckstücks 2, die dem Baggage-Handling-System 4 zum Zeitpunkt des Check-Ins bekannt waren, und allenfalls weitere Gepäckinformationen, beispielsweise der Passagiername. Die Gepäckidentifikationsnummer 10 enthält keine für das Treffen einer Sortierentscheidung ausreichenden Sortierinformationen - dies aus dem Grund, da diese sich durch Flugroutenänderungen, verpasste Anschlussflüge o.ä. ändern können, nachdem das Gepäckstück 2 bereits in das Baggage-Handling-System 4 eingeführt wurde.

Das Baggage-Handling-System 4 kann verbunden werden mit einem Gepäckdatenverwaltungssystem 22, auf welches auch die Baggage-Handling-Systeme 4 weiterer Flughäfen Zugriff haben und welches die Gepäckidentifikationsnummer 10 in einer BSM-Datenbank 24 mit einer dynamisch Sortierinformationen abbildenden Baggage-Source-Message (BSM) 26 verknüpft. Wenn das Gepäckdatenverwaltungssystem 22 sowie alle mit ihm verbindbaren System - Baggage-Handling-Systeme 4, Flugdatenverwaltungssysteme o.ä. - korrekt funktionieren, bildet eine Baggage-Source-Message 26 stets aktuell mindestens die für das Treffen einer korrekten Sortierentscheidung benötigten Informationen ab. Zum Erstellungszeitpunkt des Gepäckanhängers stimmt eine anhand einer Baggage-Source-Message 4 und die anhand der ursprünglichen Sortierinformation 8 getroffene Sortierentscheidung überein. Bei korrekt funktionierenden Systemen soll eine Sortierentscheidung über die Verknüpfung der Gepäckidentifikationsnummer 10 mit der Baggage-Source-Message 26 getroffen werden, also anhand der Gepäckidentifikationsnummer 10. Die auf dem Informationsträger 6 aufgedruckte ursprüngliche Sortierinformation 8 wird verwendet, wenn die Baggage-Source-Message 26 nicht abgerufen und/ oder die Gepäckidentifikationsnummer 10 nicht ausgelesen und/ oder zugeordnet werden kann.

Das Baggage-Handling-System 4 umfasst ein Fördersystem 20, auf dessen Förderstrecken ein Gepäckstück 2 möglichst automatisiert transportiert und sortiert wird, eine BHS-Steuerung 12 als übergeordnete - meist Flughafen-lokale - Steuerzentrale des gesamten Baggage-Handling-Systems 4 und mindestens eine Detektionseinheit 14. Die BHS-Steuerung 12 ist adaptiert zur Kommunikation mit dem Gepäckdatenverwaltungssystem 22 und/ oder mit der Detektionseinheit 14 und/ oder mit dem Fördersystem 20. Die Detektionseinheit 14 umfasst mindestens einen Detektor 16 zum optischen Erfassen des Informationsträgers 6 und mindestens eine Detektionssteuerung 18. Vorteilhafterweise ist die Detektionseinheit 14 an einer Sortierschlüsselstelle, beispielsweise in unmittelbarer Nähe einer Förderstreckenabzweigung, angeordnet. An der Sortierschlüsselstelle wird das Gepäckstück 2 basierend auf der getroffenen Sortierentscheidung sortiert. Eine Detektionseinheit 14 umfasst mindestens einen Detektor 16 und eine Detektionssteuerung 18. Der Detektor 16 ist zum optischen Erfassen des Informationsträgers 6 ausgestaltet. Vom optisch erfassten Informationsträger 6 kann sowohl die Textinformation, als auch der Barcode der Gepäckidentifikationsnummer 10 ausgelesen werden. Ein Laserscanner ist somit nicht mehr unbedingt erforderlich. Das gleichzeitige Erfassen von sowohl Barcode als auch der Textinformation der Gepäckidentifikationsnummer 10 ermöglicht eine höhere Rate an korrekt erfassten Gepäckidentifikationsnummern 10, da sowohl die Textinformation, als auch der Barcode zum Auslesen herangezogen werden kann, beispielsweise bei eingeschränkter Lesbarkeit aufgrund geknickter und/ oder verdreckter Gepäckanhänger.

Wenn ein Gepäckstück 2 die Detektionseinheit 14 passiert, wird automatisch der Informationsträger 6 erfasst. Die Detektionssteuerung 18 ist zum Auslesen des Informationsträgers 6 mittels Texterkennung (Optical Character Recognition, OCR) ausgestaltet. Die Detektionseinheit 14 kann sowohl die Gepäckidentifikationsnummer 10 (als Barcode und/ oder als Text), als auch die ursprüngliche Sortierinformation 8 auslesen. Die Detektionssteuerung 18 kann autonom und unabhängig von der BHS-Steuerung 12 zumindest einen Teil des Fördersystems 20 ansteuern und so ein Gepäckstück 2 sortieren.

Nach dem Auslesen des Informationsträgers 6 wird eine Verbindung zwischen Detektionseinheit 14 und BHS-Steuerung 12 aufgebaut. Alternativ und/ oder zusätzlich zu einem lokalen Auslesen des Informationsträgers 6 durch die Detektionseinheit 14 kann ein Auslesen auch durch die BHS-Steuerung 12 erfolgen, was eine redundante Absicherung bei Ausleseproblemen der Detektionssteuerung 18 bietet. Wenn die Gepäckidentifikationsnummer 10 erfolgreich ausgelesen wurde - durch die Detektionseinheit 14 und/ oder durch die BHS-Steuerung 12 - und bei einem erfolgreichen Verbindungsaufbau zwischen BHS-Steuerung 12 und Detektionseinheit 14, versucht die BHS-Steuerung 12 eine Sortierentscheidung anhand der Gepäckidentifikationsnummer 10 zu treffen.

Die BHS-Steuerung 12 baut hierzu eine Verbindung zum übergeordneten Gepäckdatenverwaltungssystem 22 auf, mit dem Ziel, eine der Gepäckidentifikationsnummer 10 zugeordnete, aktuelle Baggage-Source-Message 26 zu empfangen. Bei erfolgreichem Verbindungsaufbau, erfolgreicher Abfrage der Baggage-Source-Message 26 und erfolgreichem Empfangen derselben durch die BHS-Steuerung 12, trifft die BHS-Steuerung 12 eine Sortierentscheidung anhand der Baggage-Source-Message 26, übermittelt die getroffene Sortierentscheidung an die Detektionseinheit 14, woraufhin die Detektionseinheit 14 das Fördersystem 20 ansteuert und das Gepäckstück 2 weiter gemäß der getroffenen Sortierentscheidung abgewickelt wird.

Um kurzfristige, die korrekte Sortierentscheidung beeinflussende Änderungen zu berücksichtigen, soll nach Möglichkeit stets die aktuelle Baggage-Source-Message 26 als Basis für die Sortierentscheidung herangezogen werden. Um dennoch einen kompletten Stillstand des Sortierprozesses zu verhindern, wenn dies nicht möglich ist, soll automatisiert die auf dem Informationsträger 6 aufgedruckte, ursprüngliche Sortierinformation 8 herangezogen werden.

Bei einem nicht erfolgreichem Aufbauen einer Verbindung zwischen Detektionseinheit 14 und BHS-Steuerung 12 und/ oder einem nicht erfolgreichem Auslesen der Gepäckidentifikationsnummer 10 und/ oder einem nicht erfolgreichem Treffen einer Sortierentscheidung durch die BHS-Steuerung 12 wird daher eine Sortierentscheidung basierend auf zumindest Teilen der ursprünglichen Sortierinformationen 8 des ausgelesenen Informationsträgers 6 getroffen. Dies kann sowohl durch die BHS-Steuerung 12, als auch lokal an der Detektionseinheit 14 durch die Detektionssteuerung 18 erfolgen. Da die ursprüngliche Sortierinformation 8 des Informationsträgers 6 nicht nur erfasst wird, sondern bereits ausgelesen vorliegt, kann bei einem Verbindungsausfall die Sortierentscheidung rasch autonom und lokal von der jeweiligen Untereinheit getroffen werden kann. Auf diese Weise ist das Baggage-Handling-System 4 auch dann weiter zum Treffen einer Sortierentscheidung und somit zum weiteren automatisierten Abwickeln eines Gepäckstücks 2 ausgestaltet, wenn die lokale Verbindung innerhalb des Baggage-Handling-Systems 4 zwischen BHS-Steuerung 12 und Detektionseinheit 14 ausfällt, oder wenn die Verbindung zwischen Baggage-Handling-System 4 und Gepäckdatenverwaltungssystem 22 ausfällt.

Um gemäß einer weiteren Ausführungsform für den Fall eines nicht erfolgreichen Verbindungsaufbaus zwischen Gepäckdatenverwaltungssystem 22 und Baggage-Handling-System 4 vorzusorgen, kann bei Funktionieren aller involvierten Systeme, vorteilhafterweise bei freier Kapazität der bestehenden Verbindung und/ oder der beteiligten Systeme, insbesondere freier Rechenkapazität der BHS-Steuerung bzw. der Detektionssteuerung 18, regelmäßig ein Satz von assoziierten Gepäckidentifikationsnummern 10 und aktualisierten Sortierinformationen 8a durch die Detektionseinheit 14 und/ oder die BHS-Steuerung 12 abgespeichert werden, bevor das Treffen einer Sortierentscheidung für ein Gepäckstück 2 erforderlich ist. Dieser Satz von Daten wird in einer BHS-Datenbankabgespeichert, auf welche die Detektionseinheit 14 und/ oder die BHS-Steuerung 12 Zugriff hat, wobei die BHS-Datenbank die in der BSM-Datenbank 24 enthaltenen Informationen ganz oder zumindest teilweise abbildet. Die aktualisierten Sortierinformationen 8a umfassen mindestens die zum Treffen einer Sortierentscheidung notwendigen Informationen der Baggage-Source-Message 26 zum Zeitpunkt des Abspeicherns. So können die zum Zeitpunkt des Abspeicherns veränderten, aktualisierten Sortierinformationen 8a beim Treffen der Sortierentscheidung zu einem späteren Zeitpunkt berücksichtigt werden, auch wenn zu diesem späteren Zeitpunkt unter Umständen keine erfolgreiche Abfrage der Baggage-Source-Message 26 erfolgen kann. So kann zum Treffen einer Sortierentscheidung die aktualisierte Sortierinformation 8a anstelle der ursprünglichen Sortierinformation 8 herangezogen werden; die Sortierentscheidung wird also anhand der Gepäckidentifikationsnummer 10 getroffen.

Gemäß einer weiteren Ausführungsform der Erfindung generiert die Detektionseinheit 14 nach Auslesen der ursprünglichen Sortierinformation 8 automatisiert eine IATA-konforme Fallback-Identifikationsnummer. Die Fallback-Identifikationsnummer codiert wenigstens partiell Teile der ursprünglichen Sortierinformation 8 des ausgelesenen Informationsträgers 6 und kann zum Treffen einer Sortierentscheidung herangezogen werden, wenn der Gepäckidentifikationsnummer 10 keine Baggage-Source-Message 26 zugeordnet werden kann - weil keine Verbindung zur BSM-Datenbank 24 aufgebaut werden kann und/ oder die Gepäckidentifikationsnummer 10 nicht ausgelesen werden konnte. Anstelle der ursprünglichen Sortierinformation 8 kann bei Vorliegen auch die aktualisierte Sortierinformation 8a verwendet werden.

Anhand der Fallback-Identifikationsnummer kann besonders rasch und einfach eine Sortierentscheidung getroffen werden, darüber hinaus kann die Fallback-Identifikationsnummer auch an weitere Baggage-Handling-Systeme 4' übermittelt und von diesen ohne weiteres ausgelesen bzw. entschlüsselt und verwendet werden.

Das oben beschriebene Vorgehen zum Treffen einer Sortierentscheidung anhand der ursprünglichen Sortierinformation 8 oder anhand der aktualisierten Sortierinformation 8a ermöglicht eine weitere Abwicklung von Gepäckstücken 2, wenn keine Baggage-Source-Message 26 abgerufen werden kann. Dies verhindert einen Rückstau im Baggage-Handling-System 4, birgt jedoch die Gefahr, dass die getroffene Sortierentscheidung nicht korrekt ist. Da die Baggage-Source-Message 26 von nur wenigen Gepäckstücken 2 nach dem Erstellen des Informationsträgers 6 tatsächlich verändert wird, ist die anhand der ursprünglichen Sortierinformation 8 getroffene Sortierentscheidung in den meisten Fällen korrekt und stimmt mit derjenigen Sortierentscheidung, die anhand der Baggage-Source-Message 26 getroffen worden wäre überein; die Fehlsortierquote ist daher zwar gering, aber nicht null.

Wenn zu einem späteren Zeitpunkt wieder eine Verbindung zwischen Baggage-Handling-System 4 und übergeordnetem Gepäckdatenverwaltungssystem 22 und/ oder zwischen BHS-Steuerung 12 und Detektionseinheit 14 aufgebaut werden kann, kann die Fehlsortierquote noch weiter verringert werden, indem die für ein Gepäckstück 2 bereits getroffene Sortierentscheidung zu einem späteren Zeitpunkt noch einmal überprüft wird, beispielsweise bevor das Gepäckstück 2 in ein Flugzeug verladen und somit aus dem Baggage-Handling-System 4 eines Flughafens ausgeschleust wird. Durch das erneute Überprüfen kann eine unter Umständen erfolgte Fehlsortierung mit relativ geringem Aufwand noch korrigiert werden.

Gemäß einer weiteren Ausführungsform kann die Detektionseinheit 14 einen weiteren Detektor 16' umfassen, der als Laserscanner zum Erfassen eines Barcodes, beispielsweise der Gepäckidentifikationsnummer 10, ausgestaltet ist.

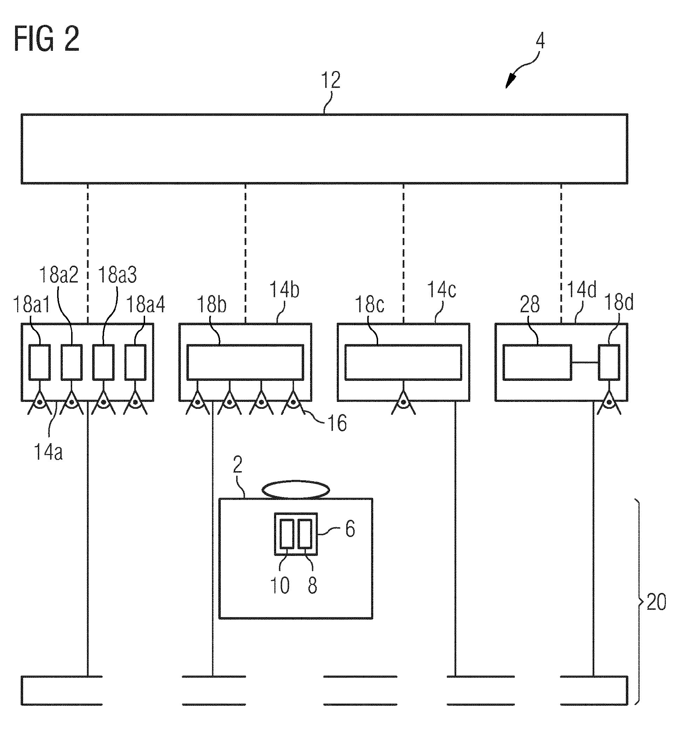

Figur 2 zeigt ein weiteres Baggage-Handling-System 4 gemäß einer weiteren Ausführungsform der Erfindung welches unterschiedlich ausgestalteten Detektionseinheiten 14a, 14b, 14c, 14d umfasst. Ein Baggage-Handling-System 4 kann je nach Größe eine unterschiedliche Anzahl an gleich und/ oder unterschiedlich ausgestalteten Detektionseinheiten 14 umfassen, wobei insbesondere die Ausgestaltung und Größe des Fördersystems 20, auf welchem die Gepäckstücke 2 transportiert und sortiert werden, die Anzahl und Ausgestaltung der Detektionseinheiten 14 bestimmt. Die dargestellten Detektionseinheiten 14a-14d können prinzipiell auch zu einer größeren Detektionseinheit 14' zusammengefasst werden.

Jede der Detektionseinheiten 14a-14d ist zum autonomen Ansteuern eines Bereichs des Fördersystems 20 ausgestaltet, wobei die jeweiligen Detektoren 16 die Gepäckstücke 2 in dem jeweiligen Bereich mindestens teilweise detektieren. Die Detektionseinheiten 14a-14d sind mit der BHS-Steuerung 12 verbindbar, wobei die BHS-Steuerung 12 den Detektionssteuerungen 18a-18d übergeordnet sein kann aber nicht muss. Die Detektionssteuerungen 18a-18d sind zum Auslesen des von den Detektoren 16 erfassten Informationsgehaltes adaptiert und/ oder zum Ansteuern des Fördersystems 20 und/ oder zur Kommunikation mit der BHS-Steuerung 12.

Die Detektionseinheit 14a umfasst vier Detektoren 16 mit jeweils eigener Detektionssteuerung 18a1-18a2. Die Detektionseinheit 14b umfasst vier Detektoren 16, die von einer gemeinsamen Detektionssteuerung 18b kontrolliert werden. Die Detektionseinheit 14c umfasst nur einen Detektor 16 und nur eine Detektionssteuerung 18c. Die Detektionseinheit 14d umfasst wie die Detektionseinheit 14c nur einen Detektor 16 und nur eine Detektionssteuerung 18d, umfasst jedoch zusätzlich noch eine speicherprogrammierbare Steuerung (SPS - Programmable-Logic-Controller, PLC) 28 zur vereinfachten Ansteuerung und Kommunikation zwischen Detektionseinheit 14d, Fördersystem 22 und BHS-Steuerung 12.

Gemäß einer weiteren Ausführungsform kann das Baggage-Handling-System 4 weitere speicherprogrammierbare Steuerungen 28 umfassen. Eine Verbindung zwischen zwei oder mehr Detektionseinheiten 14 kann über eine speicherprogrammierbare Steuerung 28 aufgebaut werden, wobei so die Funktionalität der bestehenden Komponenten besonders einfach erweitert werden kann. Eine Detektionseinheit 14 kann die speicherprogrammierbare Steuerung 28 umfassen oder eine speicherprogrammierbare Steuerung 28 kann mehrere Detektionseinheiten 14 mit der BHS-Steuerung 12 verbinden. Auch die BHS-Steuerung 12 kann eine oder mehrere speicherprogrammierbare Steuerungen 28 umfassen.

### Bezugszeichenliste

- 2: Gepäckstück
- 4: Baggage-Handling-System (BHS)
- 6: Informationsträger
- 8: ursprüngliche Sortierinformationen
- 8a: aktualisierte Sortierinformationen
- 10: Gepäckidentifikationsnummer (License-Plate-Number)
- 12: BHS-Steuerung
- 14: Detektionseinheit
- 16: Detektor
- 18: Detektionssteuerung
- 20: Fördersystem
- 22: Gepäckdatenverwaltungssystem
- 24: BSM-Datenbank
- 26: Baggage-Source-Message (BSM)
- 28: speicherprogrammierbare Steuerung (SPS, PLC)
- 30: BHS-Datenbank

## Patentansprüche

1. Verfahren zum Sortieren eines Gepäckstücks (2) eines Passagiers im Rahmen der Abwicklung durch ein Baggage-Handling-System (BHS) (4) als lokale Gepäckabfertigungsanlage, beispielsweise eines Flughafens, wobei:
- das Gepäckstück (2) mit einem beispielsweise als Gepäckanhänger ausgestalteten Informationsträger (6) markiert wird, welcher vor einer Übergabe des Gepäckstücks (2) an das Baggage-Handling-System (4) erstellt wird;
- der Informationsträger (6) ursprüngliche Sortierinformationen (8) und eine eindeutige Gepäckidentifikationsnummer (License-Plate-Number) (10) ganz oder zumindest teilweise in aufgedruckter Textform umfasst;
- das Baggage-Handling-System (4) eine BHS-Steuerung (12) und eine Detektionseinheit (14) umfasst;
- eine Detektionseinheit (14) mindestens einen Detektor (16) zum optischen Erfassen des Informationsträgers (6) und mindestens eine Detektionssteuerung (18) umfasst;
umfassend die Verfahrensschritte:
a) automatisches Erfassen des Informationsträgers (6) mit mindestens einem Detektor (16);
b) Auslesen des Informationsträgers (6) durch die Detektionseinheit (14) mittels Texterkennung (OCR);
c) Aufbauen einer Verbindung zwischen Detektionseinheit (14) und BHS-Steuerung (12);
d) bei erfolgreichem Auslesen der Gepäckidentifikationsnummer (10) und erfolgreichem Aufbauen einer Verbindung zwischen Detektionseinheit (14) und BHS-Steuerung (12) versucht die BHS-Steuerung (12) eine Sortierentscheidung anhand der Gepäckidentifikationsnummer (10) zu treffen;
e) bei einem nicht erfolgreichem Aufbauen einer Verbindung zwischen Detektionseinheit (14) und BHS-Steuerung (12) und/ oder einem nicht erfolgreichem Auslesen der Gepäckidentifikationsnummer (10) und/ oder einem nicht erfolgreichem Treffen einer Sortierentscheidung durch die BHS-Steuerung (12) wird eine Sortierentscheidung basierend auf zumindest Teilen der ursprünglichen Sortierinformationen (8) des ausgelesenen Informationsträgers (6) getroffen;
f) weitere Abwicklung des Gepäckstücks (2) gemäß der getroffenen Sortierentscheidung.

2. Verfahren nach Anspruch 1, zudem umfassend den Verfahrensschritt
Kommunikation der BHS-Steuerung (12) mit einem übergeordneten Gepäckdatenverwaltungssystem (22), welches die Gepäckidentifikationsnummer (10) einer dynamischen Baggage-Source-Message (BSM) (24) zuordnet.

3. Verfahren nach einem der Ansprüche 1 bis 2, **dadurch gekennzeichnet, dass**
eine Verbindung zwischen Detektionseinheit (14) und BHS-Steuerung (12) über eine speicherprogrammierbare Steuerung (SPS - Programmable Logic Controller, PLC) (28) aufgebaut wird.

4. Verfahren nach einem der Ansprüche 1 bis 3, zudem umfassend den Verfahrensschritt
automatisiertes Generieren einer Fallback-Identifikationsnummer durch die Detektionseinheit (14), welche zumindest Teile des ausgelesenen Informationsträgers (6) wenigstens partiell codiert.

5. Verfahren nach einem der Ansprüche 1 bis 4, zudem umfassend den Verfahrensschritt
Treffen einer Sortierentscheidung anhand der Fallback-Identifikationsnummer.

6. Verfahren nach einem der Ansprüche 1 bis 5, zudem umfassend den Verfahrensschritt
regelmäßiges Abspeichern eines Satzes von assoziierten Gepäckidentifikationsnummern (10) und aktualisierten Sortierinformationen (8a) durch die Detektionseinheit (14) und/ oder die BHS-Steuerung (12).

7. Verfahren nach einem der Ansprüche 1 bis 6, zudem umfassend den Verfahrensschritt
Überprüfen der bereits getroffenen Sortierentscheidung zu einem späteren Zeitpunkt, insbesondere wenn die Sortierentscheidung nicht durch die BHS-Steuerung (12) getroffen wurde.

8. Baggage-Handling-System (4) als lokale Gepäckabfertigungsanlage, beispielsweise eines Flughafens, zum Abwickeln eines Gepäckstücks (2) eines Passagiers gemäß einer Sortierentscheidung, umfassend eine BHS-Steuerung (12) und eine Detektionseinheit (14), welche mindestens einen Detektor (16) zum optischen Erfassen des Informationsträgers (6) und mindestens eine Detektionssteuerung (18) umfasst, wobei
- das Gepäckstück (2) mit einem beispielsweise als Gepäckanhänger ausgestalteten Informationsträger (6) markiert wird, welcher vor einer Übergabe des Gepäckstücks (2) an das Baggage-Handling-System (4) erstellt wird;
- der Informationsträger (6) ursprüngliche Sortierinformationen (8) und eine eindeutige Gepäckidentifikationsnummer (10) ganz oder zumindest teilweise in aufgedruckter Textform umfasst;
**dadurch gekennzeichnet, dass**
a) mindestens eine Detektionseinheit (14) zum automatischen optischen Erfassen des Informationsträgers (6) ausgestaltet ist;
b) die Detektionseinheit (14) zum Auslesen des Informationsträgers (6) mittels Texterkennung (OCR) ausgestaltet ist;
c) die Detektionseinheit (14) und die BHS-Steuerung (12) miteinander verbindbar ausgestaltet sind;
d) die BHS-Steuerung (12) zum Treffen einer Sortierentscheidung anhand der Gepäckidentifikationsnummer (10) ausgestaltet ist; und
e) die Detektionseinheit (14) ausgestaltet ist, eine Sortierentscheidung basierend auf zumindest Teilen der ursprünglichen Sortierinformationen (8) des ausgelesenen Informationsträgers (6) zu treffen.

9. Baggage-Handling-System (4) nach Anspruch 8, **dadurch gekennzeichnet, dass**
die BHS-Steuerung (12) ausgestaltet ist zur Kommunikation mit einem übergeordneten Gepäckdatenverwaltungssystem (22), welches die Gepäckidentifikationsnummer (10) einer dynamischen Baggage-Source-Message (24) zuordnet.

10. Baggage-Handling-System (4) nach einem der Ansprüche 8 bis 9, **dadurch gekennzeichnet, dass**
die Detektionseinheit (14) und/ oder die BHS-Steuerung (12) ausgestaltet sind eine Fallback-Identifikationsnummer, welche zumindest Teile des ausgelesenen Informationsträgers (6) wenigstens partiell codiert, zu generieren, insbesondere automatisiert zu generieren.

11. Baggage-Handling-System (4) nach einem der Ansprüche 8 bis 10, **dadurch gekennzeichnet, dass**
das Baggage-Handling-System (4) mindestens eine speicherprogrammierbare Steuerung (28) umfasst, über welche eine Verbindung zwischen Detektionseinheit (14) und BHS-Steuerung (12) aufgebaut wird.

12. Baggage-Handling-System (4) nach einem der Ansprüche 8 bis 11, **dadurch gekennzeichnet, dass**
die Detektionseinheit (14) und/ oder die BHS-Steuerung (12) ausgestaltet sind, eine Sortierentscheidung anhand der Fallback-Identifikationsnummer zu treffen.

13. Baggage-Handling-System (4) nach einem der Ansprüche 8 bis 12, **dadurch gekennzeichnet, dass**
das Baggage-Handling-System (4) mindestens eine BHS-Datenbank umfasst, welche einen Satz von assoziierten Gepäckidentifikationsnummern (10) und aktuellen Sortierinformationen (8a) abspeichert.

14. Baggage-Handling-System (4) nach Anspruch 13, **dadurch gekennzeichnet, dass**
die Detektionseinheit (14) und/ oder die BHS-Steuerung (12) auf die BHS-Datenbank Zugriff haben.

15. Baggage-Handling-System (4) nach einem der Ansprüche 8 bis 14, **dadurch gekennzeichnet, dass**
das Baggage-Handling-System (4) und/ oder die Detektionseinheit (14) und/ oder die BHS-Steuerung (12) zum erneuten Überprüfen einer bereits getroffenen Sortierentscheidung ausgestaltet sind.
